# EUROPÄISCHE PATENTSCHRIFT

(11) **EP 2 080 694 B1**
(45) Veröffentlichungstag und Bekanntmachung des Hinweises auf die Patenterteilung: **01.05.2013**
(21) Anmeldenummer: 09000176.9
(22) Anmeldetag: 08.01.2009
(51) Int. Cl.: B62D 35/00

(54) **Luftleitvorrichtung eines Fahrzeugs**
Air directing device of a vehicle
Dispositif de guidage d'air d'un véhicule

(30) Priorität: 18.01.2008 DE 102008005194
(43) Veröffentlichungstag der Anmeldung: 22.07.2009
(73) Patentinhaber: HS Genion GmbH, 86899 Landsberg am Lech (DE)
(72) Erfinder: Asendorf, Sven, 82211 Herrsching (DE); Koleno, Robert, 82319 Starnberg (DE)
(74) Vertreter: Fischer & Konnerth

(56) Entgegenhaltungen:
- EP-A1- 0 454 945
- EP-A2- 1 193 166
- DE-A1- 10 136 823
- DE-A1- 19 902 289
- DE-C1- 19 652 692
- JP-A- 60 234 075
- US-A1- 2002 011 742

## Beschreibung

Die Erfindung betrifft eine Luftleitvorrichtung eines Fahrzeugs, die an einem zwischen einer Schließstellung und einer Offenstellung bewegbaren Deckel des Fahrzeugs angeordnet ist und ein Luftleitelement aufweist.

Aus der DE 10 2006 017 522 A1 und EP0454945 ist eine gattungsgemäße Luftleitvorrichtung bekannt geworden, die mittels zweier Ausstellhebel an einer Trägerplatte verstellbar gelagert ist, welche an einem Kofferraumdeckel oder einer Heckklappe angebracht ist. Die gesamte Luftleitvorrichtung ist an dem Kofferraumdeckel bzw. der Heckklappe integriert und kann mit diesem bzw. mit dieser verschwenkt werden. Eine kraftaufnehmende Abstützung der Luftleitvorrichtung an einer festen Karosseriestruktur ist nicht vorgesehen.

Aus der DE 197 41 321 A1 ist eine heckseitige Luftleitvorrichtung mit einem mittels einer Lager- und Verstelleinrichtung ausfahrbaren Heckflügel bekannt geworden. Der Heckflügel ist über die Lager- und Verstelleinrichtung an einem an einer heckseitigen Haube vorgesehenen Heckspoiler gelagert. Auch diese an der Haube abgestützte Luftleitvorrichtung besitzt keine zusätzliche Abstützung an einer festen Karosseriestruktur.

Bei derartigen Luftleitvorrichtungen werden somit alle Kräfte vom Spoiler oder Luftleitelement über die Heckklappe, über Scharniere sowie über Schlösser und Dichtungen der Heckklappe in den Rohbau oder die feste Karosseriestruktur eingeleitet. Die Heckklappe mit ihrer Struktur und ihre Anbindung über Scharniere, Schlösser, Dichtungen und Auflagen zum Fahrzeug bzw. der Karosserie hin begrenzt die Einsatzmöglichkeiten einer solchen Gestaltung einer Luftleitvorrichtung. Hohe Kräfte, die im Fahrbetrieb z. B. durch Luftströmung oder im Stand auch durch Missbrauch entstehen können, können somit nicht ausreichend sicher in den Rohbau oder die feste Karosseriestruktur eingeleitet werden.

Der Erfindung liegt die Aufgabe zugrunde, eine eingangs genannte Luftleitvorrichtung zu schaffen, die im Hinblick auf ihre Funktionalität und Betriebssicherheit verbessert ist.

Die Aufgabe wird bei der oben genannten Luftleitvorrichtung erfindungsgemäß dadurch gelöst, dass die Luftleitvorrichtung bei geschlossenem Deckel an einer Karosseriestruktur abgestützt ist und/oder mittels einer Verriegelungseinrichtung lösbar verriegelt gehalten ist.

Weiterhin ist die erfindungsgemäße Abstützung und/oder Verriegelung der Luftleitvorrichtung an einer Karosseriestruktur wie dem Rohbau oder einem rohbaufesten Teil werden am Luftleitelement auftretende Kräfte unmittelbar in die Tragstruktur des Fahrzeugs eingeleitet. Diese Gestaltung ermöglicht die Aufnahme sehr hoher Kräfte sowohl im Fahrbetrieb wie auch durch statische Belastung oder bei Missbrauch oder mutwilliger Beschädigung. Der Deckel selbst wie auch seine Lagerung und Dichtungen werden durch die Luftleitvorrichtung im wesentlichen nicht belastet. Dennoch bleibt die Zugänglichkeit eines unter dem Deckel vorhandenen Raumes oder einer darin angeordneten Einrichtung bestehen, da der Deckel gemeinsam mit der gesamten Luftleitvorrichtung bewegt oder verschwenkt werden kann. Dabei kann der erfindungsgemäße Vorteil schon allein durch die Abstützung wie auch durch die Verriegelung und insbesondere durch eine Kombination dieser beiden Gestaltungen erzielt werden. Ein weiterer Vorteil liegt darin, dass eine ansonsten vorhandene Verriegelung des Deckels, die diesen an einer Bewegung hindern soll, entfallen kann, da die Verriegelungseinrichtung der Luftleitvorrichtung diese Verriegelungsfunktion übernimmt. Unter einem Deckel wird ein beliebiges bewegbares Fahrzeugbauteil verstanden, das im wesentlichen in einer Fahrzeugaußenhaut angeordnet ist oder einen Teil hiervon bildet.

Vorteilhafte Ausgestaltungen der Erfindung sind in den abhängigen Ansprüchen angegeben.

Gemäß einer bevorzugten Gestaltung weist die Luftleitvorrichtung eine Lager- und Verstelleinrichtung auf, mittels der das Luftleitelement zwischen einer Ruhestellung und einer ausgefahrenen Betriebsstellung verstellbar ist. Ein solches Luftleitelement kann z. B. im Stand eingefahren sein und im oder für den Fahrbetrieb ausfahren. Des weiteren kann es z. B. nach Vorwahl oder in Abhängigkeit von der Fahrgeschwindigkeit ausgefahren werden und auch in seiner Schwenkstellung verstellt werden.

Die Luftleitvorrichtung enthält zweckmäßigerweise beidseits einer vertikalen Fahrzeuglängsmittelebene jeweils eine Lager- und Verstelleinrichtung für das Luftleitelement, jedoch ist auch eine zentrale Lager- und Verstelleinrichtung möglich.

Somit kann der Deckel, der lediglich abgestützt ist oder dessen Verriegelungseinrichtung entriegelt ist, gemeinsam mit der Luftleitvorrichtung zwischen seiner Schließstellung und seiner Offenstellung bewegt und verstellt werden.

Zweckmäßigerweise kann vorgesehen sein, dass der Deckel nur bei eingefahrenem Luftleitelement bewegbar ist. Damit kann gegebenenfalls eine Kollision des ausgefahrenen Luftleitelements mit einem anderen Fahrzeugteil vermieden werden.

Des weiteren kann vorgesehen sein, dass die Luftleitvorrichtung nur bei ausgefahrenem Luftleitelement an der Karosseriestruktur abgestützt ist und/oder mittels der Verriegelungseinrichtung lösbar verriegelt gehalten ist. Bei einem verstellbaren Luftleitelement wird damit berücksichtigt, dass hohe Kräfte im wesentlichen nur bei aktivem ausgefahrenem Luftleitelement an diesem auftreten.

Zweckmäßigerweise bildet die Verriegelungseinrichtung der Luftleitvorrichtung eine Verriegelung des geschlossenen Deckels, so dass der Deckel keine eigene Verriegelungseinrichtung aufweisen muss, falls er grundsätzlich auch verriegelbar sein soll.

Gemäß einer bevorzugten Gestaltung ist eine Trägereinrichtung unterhalb des Deckels angeordnet und mit diesem fest verbunden und an der Trägereinrichtung ist die Lager- und Verstelleinrichtung für das Luftleitelement angeordnet. Eine solche Trägereinrichtung bildet in jeglicher Gestaltung eine stabile kraftaufnehmende Lagerung. Des weiteren kann die Trägereinrichtung eine Bodenplatte oder eine ähnliche Struktur aufweisen, an der die Lager- und Verstelleinrichtung für das Luftleitelement angeordnet ist.

Bevorzugt weist die Verriegelungseinrichtung der Luftleitvorrichtung ein Schloss an der Trägereinrichtung bzw. der Bodenplatte für eine lösbare Verriegelung auf. Schlösser in beliebiger Bauart können verwendet werden, wobei eine einfache Bauart einen Riegelhaken mit einem zu umgreifenden Bolzen als Gegenlager aufweist. Die Verriegelungseinrichtung bzw. das Schloss kann von einer Antriebseinrichtung gesteuert betätigt werden.

Gemäß einer weiteren bevorzugten Ausführungsform ist das Luftleitelement mittels der von zumindest einer Antriebseinrichtung bewegbaren Lager- und Verstelleinrichtung in seiner Höhenlage gegenüber dem Deckel verstellbar. Damit kann die Höhenstellung des Luftleitelements an die Strömungsverhältnisse oder auch an individuelle Vorgaben angepasst werden.

Insbesondere ist das Luftleitelement an der Lager- und Verstelleinrichtung schwenkbar gelagert und mittels einer Verstellantriebseinrichtung in seiner Schwenkstellung veränderbar. Diese zusätzliche Einstellmöglichkeit kann das Strömungsverhalten weiter verbessern.

Die erste Antriebseinrichtung und/oder die zweite Antriebseinrichtung und/oder die Verstellantriebseinrichtung kann bzw. können zumindest einen Hydraulikzylinder aufweisen. Jedoch sind auch andere Antriebe wie elektrische oder mechanische Antriebe möglich, z. B. ein auf einen Spindelantrieb wirkender Elektromotor.

Zweckmäßigerweise ist der Deckel um eine Fahrzeug-Querschwenkachse verschwenkbar und insbesondere ist der Deckel ein Heckdeckel oder eine Heckklappe eines Fahrzeugs, kann jedoch grundsätzlich auch ein verschiebbarer Deckel sein.

Die Karosseriestruktur ist z. B. ein Längsträger der Karosserie oder ein Teil eines Fahrzeugrohbaus.

Die Erfindung betrifft des weiteren auch ein Fahrzeug mit einer erfindungsgemäßen Luftleitvorrichtung.

Nachfolgend wird eine erfindungsgemäße Luftleitvorrichtung anhand eines Ausführungsbeispiels unter Bezugnahme auf die Zeichnung näher erläutert. Es zeigt:

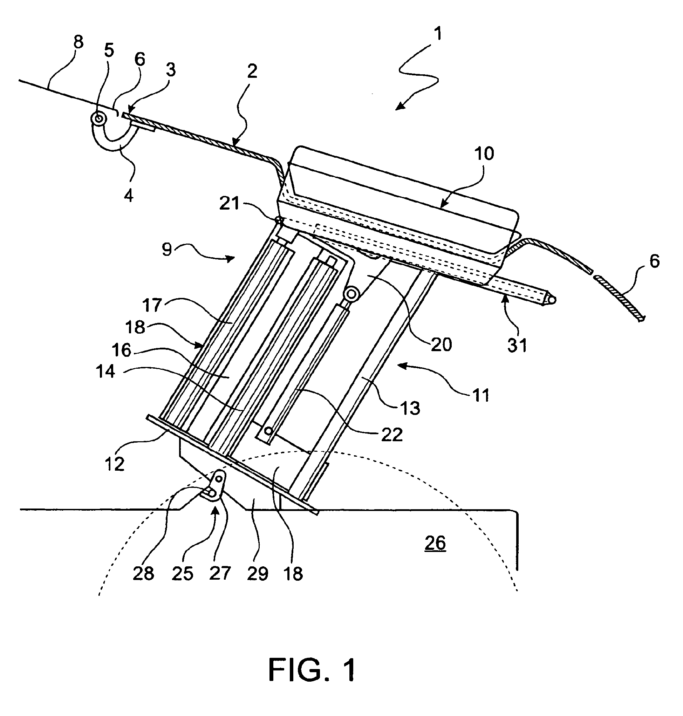

- Fig. 1: in einer Seitenansicht in schematischer Darstellung eine erfindungsgemäße Luftleitvorrichtung an einer Heckklappe eines Personenwagens mit einem in abgesenkter Ruhestellung angeordnetem Luftleitelement;

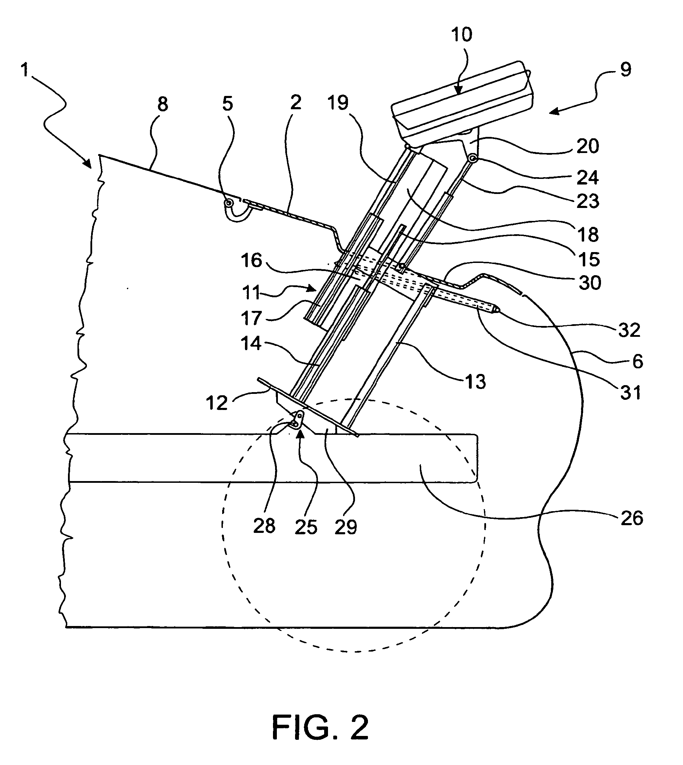

- Fig. 2: in einer Seitenansicht in schematischer Darstellung die Luftleitvorrichtung, deren Luftleitelement in sein Betriebsstellung nach oben ausgefahren ist; und
- Fig. 3: in einer Seitenansicht in schematischer Darstellung die Luftleitvorrichtung, deren Luftleitelement in Ruhestellung angeordnet ist und die mit der Heckklappe nach oben aufgeschwenkt ist.

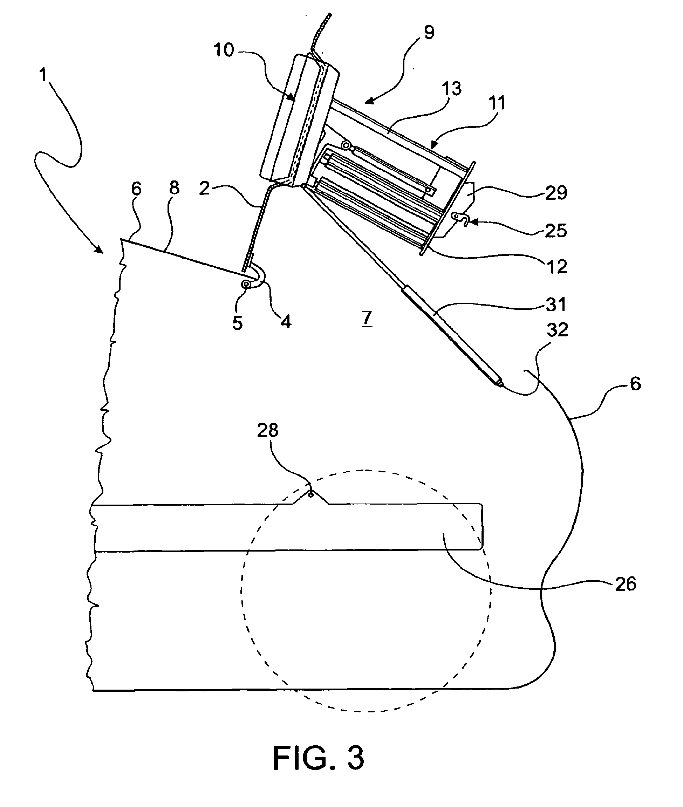

Ein Fahrzeug 1, beispielsweise ein Personenwagen mit Fließheck und heckseitigem Kofferraum oder Heckmotor, enthält einen am Fahrzeugheck angeordneten Deckel 2, der an seinem Vorderrand 3 mittels eines Schwenklagers 4, z. B. eines Scharniers oder dergleichen, um eine Schwenkachse 5 schwenkbar gelagert ist und im geschlossenen Zustand in eine Außenhaut 6 des Fließhecks des Fahrzeugs integriert ist. Bei hochgeschwenktem Deckel 2 (Fig. 3) ist eine in der Außenhaut 6 gebildete oberseitig angeordnete Öffnung 7 freigegeben, durch die ein im Fahrzeugheck angeordneter Kofferraum bzw. Heckmotor zugänglich ist. Das Schwenklager 4 ist z. B. an einer Rahmenstruktur im Bereich eines Hinter- oder Unterrandes einer Heckscheibe 8 des Fahrzeugs 1 angebracht.

Das Fahrzeug 1 enthält eine Luftleitvorrichtung 9 mit einem verstellbaren Luftleitelement 10, das in der Art eines Heckspoilers zur Strömungsbeeinflussung am Fahrzeugheck vorgesehen ist. Das Luftleitelement 10 ist mittels zweier in Fahrzeugquerrichtung voneinander beabstandeter Lager- und Verstelleinrichtungen 11 an dem Deckel 2 gelagert. Die Beschreibung der Luftleitvorrichtung 9 erfolgt anhand der in den Figuren dargestellten linksseitigen Lager- und Verstelleinrichtung 11 der beiden ansonsten gleichartig aufgebauten Lager- und Verstelleinrichtungen.

Eine Trägereinrichtung der Luftleitvorrichtung 9 weist eine Bodenplatte 12 auf, die unter dem Deckel 2 und beabstandet von diesem angeordnet und mittels einer Halterung mit dem Deckel 2 fest verbunden ist. Die Halterung enthält beispielsweise zumindest ein stabförmiges oder zylindrisches Halterungsteil 13. An der Bodenplatte 12 ist parallel zu dem Halterungsteil 13 ein erster Hydraulikzylinder 14 angeordnet, dessen aus- und einfahrbare Kolbenstange 15 mit einem ersten Lagerbauteil 16 verbunden ist, das in Bewegungsrichtung der Kolbenstange 15 mit dieser ein- und ausfahrbar ist. An dem ersten Lagerbauteil 16 ist ein zweiter Hydraulikzylinder 17 in zum ersten Hydraulikzylinder 14 paralleler Wirkrichtung angebracht, der ein am ersten Lagerbauteil 16 verschiebbar gelagertes und gegenüber diesem teleskopisch ausfahrbares zweites Lagerbauteil 18, das zusätzlich an dem Halterungsteil 13 verschiebbar gelagert sein kann, über seine Kolbenstange 19 ein- und ausfahren kann.

Am Luftleitelement 10 ist unterseitig ein Trägerteil 20 befestigt, das in seinem Vorderbereich über ein Gelenk 21 am Oberende des zweiten Lagerbauteils 18 schwenkbar angelenkt ist. Ein hydraulischer Verstellzylinder 22 ist an dem zweiten Lagerbauteil 18 angelenkt und seine Kolbenstange 23 ist an dem Trägerteil 20 beabstandet zu dessen Gelenklagerung 21 am zweiten Lagerbauteil 18 in einem Gelenk 24 angelenkt.

Ein Schloss 25 einer Verriegelungseinrichtung zum lösbaren Festlegen der Bodenplatte 12 an einer festen Karosseriestruktur 26 enthält einen an der Bodenplatte 12 gelagerten schwenkbaren Riegelhaken 27 und ein an der festen Karosseriestruktur 26 angeordnetes Gegenlager 28, z. B. einen Riegelzapfen, für den Riegelhaken 27.

In Ruhestellung und bei geschlossenem Deckel 2 ist die Luftleitvorrichtung 9 über die Verriegelungseinrichtung bzw. das Schloss 25 an der festen Karosseriestruktur 26 verriegelt gehalten. Dabei kann die Bodenplatte 12 oder eine daran angebrachte Halterung 29 für den Riegelhaken 27 an der Karosseriestruktur 26, z. B. einem Längsträger des Fahrzeugs, aufliegen, so dass das Gewicht der Luftleitvorrichtung 9 an der Karosseriestruktur 26 abgestützt ist und nicht den Deckel 2 belastet. Das Luftleitelement 10 ist in seine inaktive Ruhestellung abgesenkt, in der es in einer Vertiefung 30 des Deckels 2 aufgenommen ist und im wesentlichen bündig mit der Oberfläche des Deckels 2 und damit mit der Fahrzeugaußenhaut 6 aufgenommen ist. Die Halterung 29 ist beispielsweise eine von der Bodenplatte 12 nach unten ragende Rippe oder dergleichen.

Nach dem Entriegeln des Schlosses 25 kann der Deckel 2 gemeinsam mit der Luftleitvorrichtung 9 hochgeschwenkt werden, so dass durch die freigelegte Öffnung 7 z. B. Wartungsarbeiten am Antriebsmotor vorgenommen werden können oder der heckseitige Kofferraum be- oder entladen werden kann. Eine Gasdruckfeder 31 ist zwischen dem Deckel 2 und einer karosserieseitigen Abstützung 32 angeordnet und entlastet den Deckel 2 vom Gewicht der Luftleitvorrichtung 9.

Wenn das Luftleitelement 10 in eine aktive Betriebsstellung ausgefahren ist, ist es über die Lager- und Verstelleinrichtung 11 und die Trägereinrichtung (Halterungsteil 13) an der Karosseriestruktur 26 abgestützt, wobei die Bodenplatte 12 daran verriegelt gehalten ist. Durch Luftströmung am Luftleitelement 10 erzeugte Kräfte werden daher in die Karosseriestruktur 26 abgeleitet und belasten den Deckel 2 und seine Lagerung nicht oder nur in geringem Umfang.

Das Luftleitelement 10 kann in unterschiedliche Schwenkstellungen verstellt werden, indem die Kolbenstange 23 des Verstellzylinders 22 ein- oder ausgefahren wird.

Statt der dargestellten hydraulischen Antriebs- und Verstelleinrichtungen können auch elektrische Antriebs- und Verstelleinrichtungen bzw. Antriebsmotoren z. B. mit Spindelantrieben verwendet werden.

### Bezugszeichenliste

- 1: Fahrzeug
- 2: Deckel
- 3: Vorderrand
- 4: Schwenklager
- 5: Schwenkachse
- 6: Außenhaut
- 7: Öffnung
- 8: Heckscheibe
- 9: Luftleitvorrichtung
- 10: Luftleitelement
- 11: Lager- und Verstelleinrichtung
- 12: Bodenplatte
- 13: Halterungsteil
- 14: erster Hydraulikzylinder
- 15: Kolbenstange
- 16: erstes Lagerbauteil

- 17: zweiter Hydraulikzylinder
- 18: zweites Lagerbauteil
- 19: Kolbenstange
- 20: Trägerteil
- 21: Gelenk
- 22: Verstellzylinder
- 23: Kolbenstange
- 24: Gelenk
- 25: Schloss
- 26: Karosseriestruktur
- 27: Riegelhaken
- 28: Gegenlager
- 29: Halterung
- 30: Vertiefung
- 31: Gasdruckfeder
- 32: Abstützung

## Patentansprüche

1. Luftleitvorrichtung eines Fahrzeugs, die an einem zwischen einer Schließstellung und einer Offenstellung bewegbaren Deckel des Fahrzeugs angeordnet ist und ein Luftleitelement aufweist,
**dadurch gekennzeichnet,**
**dass** die Luftleitvorrichtung (9) bei geschlossenem Deckel (2) und zur Kraftentlastung des Deckels (2) an einer Karosseriestruktur (26) wie dem Rohbau oder einem rohbaufesten Teil abgestützt und mittels einer Verriegelungseinrichtung (25) lösbar verriegelt gehalten ist.

2. Luftleitvorrichtung nach Anspruch 1,
**dadurch gekennzeichnet, dass** sie eine Lager- und Verstelleinrichtung (11) aufweist, mittels der das Luftleitelement (10) zwischen einer Ruhestellung und einer ausgefahrenen Betriebsstellung verstellbar ist.

3. Luftleitvorrichtung nach Anspruch 1 oder 2,
**dadurch gekennzeichnet, dass** der Deckel (2) bei entriegelter Verriegelungseinrichtung (25) gemeinsam mit der Luftleitvorrichtung (9) zwischen seiner Schließstellung und seiner Offenstellung bewegbar ist.

4. Luftleitvorrichtung nach Anspruch 2 oder 3,
**dadurch gekennzeichnet, dass** der Deckel (2) nur bei eingefahrenem Luftleitelement (10) bewegbar ist.

5. Luftleitvorrichtung nach einem der Ansprüche 2 bis 4,
**dadurch gekennzeichnet, dass** die Luftleitvorrichtung (9) nur bei eingefahrenem Luftleitelement (10) an der Karosseriestruktur (26) abgestützt ist und/oder mittels der Verriegelungseinrichtung (25) lösbar verriegelt gehalten ist.

6. Luftleitvorrichtung nach einem der Ansprüche 1 bis 5,
**dadurch gekennzeichnet, dass** die Verriegelungseinrichtung (25) der Luftleitvorrichtung (9) eine Verriegelung des geschlossenen Deckels (2) bildet.

7. Luftleitvorrichtung nach einem der Ansprüche 1 bis 6,
**dadurch gekennzeichnet, dass** eine Trägereinrichtung (13) unterhalb des Deckels (2) angeordnet und mit diesem fest verbunden ist und dass an der Trägereinrichtung (13) die Lager- und Verstelleinrichtung (11) für das Luftleitelement (10) angeordnet ist.

8. Luftleitvorrichtung nach Anspruch 7,
**dadurch gekennzeichnet, dass** die Trägereinrichtung (13) eine Bodenplatte (12) aufweist, an der die Lager- und Verstelleinrichtung (11) für das Luftleitelement (10) angeordnet ist.

9. Luftleitvorrichtung nach Anspruch 7 oder 8,
**dadurch gekennzeichnet, dass** die Verriegelungseinrichtung (25) der Luftleitvorrichtung (9) ein Schloss (25) an der Trägereinrichtung (13) bzw. der Bodenplatte (12) aufweist.

10. Luftleitvorrichtung nach einem der Ansprüche 2 bis 9,
**dadurch gekennzeichnet, dass** das Luftleitelement (10) mittels der von zumindest einer Antriebseinrichtung (14, 15; 17, 19) bewegbaren Lager- und Verstelleinrichtung (11) in seiner Höhenlage gegenüber dem Deckel (2) verstellbar ist.

11. Luftleitvorrichtung nach einem der Ansprüche 2 bis 10,
**dadurch gekennzeichnet, dass** das Luftleitelement (10) an der Lager- und Verstelleinrichtung (11) schwenkbar gelagert und mittels einer Verstellantriebseinrichtung (22, 23) in seiner Schwenkstellung veränderbar ist.

12. Luftleitvorrichtung nach Anspruch 10 oder 11,
**dadurch gekennzeichnet, dass** die erste Antriebseinrichtung (14, 15) und/oder die zweite Antriebseinrichtung (17, 19) und/oder die Verstellantriebseinrichtung (22, 23) zumindest einen Hydraulikzylinder aufweist bzw. aufweisen.

13. Luftleitvorrichtung nach einem der Ansprüche 1 bis 12,
**dadurch gekennzeichnet, dass** der Deckel (2) um eine Querschwenkachse (5) verschwenkbar ist.

14. Luftleitvorrichtung nach einem der Ansprüche 1 bis 13,
**dadurch gekennzeichnet, dass** der Deckel (2) ein Heckdeckel oder eine Heckklappe ist.

15. Luftleitvorrichtung nach einem der Ansprüche 1 bis 14,
**dadurch gekennzeichnet, dass** die Karosseriestruktur (25) ein Längsträger der Karosserie ist.

## Claims

1. Air directing device of a vehicle, which is arranged on a vehicle lid movable between a closed position and an open position, and has an air directing element, **characterized in that**, when the lid (2) is closed and in order to relieve the lid (2) from force, the air directing device (9) is supported on a body structure (26), such as the body shell or a part mounted on the body shell, and is held in a releasably locked manner by means of a locking device (25).

2. Air directing device according to Claim 1, **characterized in that** it has a bearing and adjusting device (11) by means of which the air directing element (10) is adjustable between an inoperative position and an extended operating position.

3. Air directing device according to Claim 1 or 2, **characterized in that**, when the locking device (25) is unlocked, the lid (2) is movable between the closed position thereof and the open position thereof together with the air directing device (9).

4. Air directing device according to Claim 2 or 3, **characterized in that** the lid (2) is movable only when the air directing element (10) is retracted.

5. Air directing device according to one of Claims 2 to 4, **characterized in that** the air directing device (9) is supported on the body structure (26) only when the air directing element (10) is retracted, and/or is held in a releasably locked manner by means of the locking device (25).

6. Air directing device according to one of Claims 1 to 5, **characterized in that** the locking device (25) of the air directing device (9) forms a lock for the closed lid (2).

7. Air directing device according to one of Claims 1 to 6, **characterized in that** a carrier device (13) is arranged below the lid (2) and is fixedly connected thereto, and **in that** the bearing and adjusting device (11) for the air directing element (10) is arranged on the carrier device (13).

8. Air directing device according to Claim 7, **characterized in that** the carrier device (13) has a baseplate (12) on which the bearing and adjusting device (11) for the air directing element (10) is arranged.

9. Air directing device according to Claim 7 or 8, **characterized in that** the locking device (25) of the air directing device (9) has a lock (25) on the carrier device (13) or on the baseplate (12).

10. Air directing device according to one of Claims 2 to 9, **characterized in that** the air directing element (10) is adjustable in the height position thereof in relation to the lid (2) by means of the bearing and adjusting device (11) which is movable by at least one driving device (14, 15; 17, 19).

11. Air directing device according to one of Claims 2 to 10, **characterized in that** the air directing element (10) is mounted pivotably on the bearing and adjusting device (11) and the pivot position thereof is changeable by means of an adjusting driving device (22, 23).

12. Air directing device according to Claim 10 or 11, **characterized in that** the first driving device (14, 15) and/or the second driving device (17, 19) and/or the adjusting driving device (22, 23) has or have at least one hydraulic cylinder.

13. Air directing device according to one of Claims 1 to 12, **characterized in that** the lid (2) is pivotable about a transverse pivot axis (5).

14. Air directing device according to one of Claims 1 to 13, **characterized in that** the lid (2) is a rear lid or a tailgate.

15. Air directing device according to one of Claims 1 to 14, **characterized in that** the body structure (26) is a longitudinal member of the body.

## Revendications

1. Dispositif de guidage d'air d'un véhicule, qui est disposé sur un volet du véhicule, mobile entre une position fermée et une position ouverte, et qui présente un élément de guidage d'air, **caractérisé en ce que**, lorsque le volet (2) est fermé et pour soulager l'effort du volet (2), le dispositif de guidage d'air (9) est appuyé sur une structure de carrosserie (26) comme l'ossature ou une pièce solidaire de l'ossature et est maintenu verrouillé de façon détachable au moyen d'un dispositif de verrouillage (25).

2. Dispositif de guidage d'air selon la revendication 1, **caractérisé en ce qu'**il présente un dispositif de palier et de réglage (11), au moyen duquel l'élément de guidage d'air (10) est réglable entre une position de repos et une position active sortie.

3. Dispositif de guidage d'air selon la revendication 1 ou 2, **caractérisé en ce que** le volet (2) est déplaçable ensemble avec le dispositif de guidage d'air (9) entre sa position fermée et sa position ouverte avec le dispositif de verrouillage (25) déverrouillé.

4. Dispositif de guidage d'air selon la revendication 2 ou 3, **caractérisé en ce que** le volet (2) n'est déplaçable que lorsque l'élément de guidage d'air (10) est rentré.

5. Dispositif de guidage d'air selon l'une quelconque des revendications 2 à 4, **caractérisé en ce que** le dispositif de guidage d'air (9) n'est appuyé sur la structure de carrosserie (26) et/ou n'est maintenu verrouillé de façon détachable au moyen du dispositif de verrouillage (25) que lorsque l'élément de guidage d'air (10) est rentré.

6. Dispositif de guidage d'air selon l'une quelconque des revendications 1 à 5, **caractérisé en ce que** le dispositif de verrouillage (25) du dispositif de guidage d'air (9) forme un verrouillage du volet fermé (2).

7. Dispositif de guidage d'air selon l'une quelconque des revendications 1 à 6, **caractérisé en ce qu'**un dispositif de support (13) est disposé en dessous du volet (2) et est solidaire de celui-ci, et **en ce que** le dispositif de palier et de réglage (11) pour l'élément de guidage d'air (10) est disposé sur le dispositif de support (13).

8. Dispositif de guidage d'air selon la revendication 7, **caractérisé en ce que** le dispositif de support (13) présente une plaque de fond (12), sur laquelle le dispositif de palier et de réglage (11) pour l'élément de guidage d'air (10) est disposé.

9. Dispositif de guidage d'air selon la revendication 7 ou 8, **caractérisé en ce que** le dispositif de verrouillage (25) du dispositif de guidage d'air (9) présente une serrure (25) sur le dispositif de support (13) ou sur la plaque de fond (12).

10. Dispositif de guidage d'air selon l'une quelconque des revendications 2 à 9, **caractérisé en ce que** l'élément de guidage d'air (10) est réglable quant à sa position en hauteur par rapport au volet (2) au moyen du dispositif de palier et de réglage (11) déplaçable par au moins un dispositif d'entraînement (14, 15; 17, 19).

11. Dispositif de guidage d'air selon l'une quelconque des revendications 2 à 10, **caractérisé en ce que** l'élément de guidage d'air (10) est monté de façon pivotante sur le dispositif de palier et de réglage (11) et sa position de pivotement peut être changée au moyen d'un dispositif d'entraînement de réglage (22, 23).

12. Dispositif de guidage d'air selon la revendication 10 ou 11, **caractérisé en ce que** le premier dispositif d'entraînement (14, 15) et/ou le deuxième dispositif d'entraînement (17, 19) et/ou le dispositif d'entraînement de réglage (22, 23) présente/présentent au moins un cylindre hydraulique.

13. Dispositif de guidage d'air selon l'une quelconque des revendications 1 à 12, **caractérisé en ce que** le volet (2) peut pivoter autour d'un axe de pivotement transversal (5).

14. Dispositif de guidage d'air selon l'une quelconque des revendications 1 à 13, **caractérisé en ce que** le volet (2) est un volet arrière ou un hayon.

15. Dispositif de guidage d'air selon l'une quelconque des revendications 1 à 14, **caractérisé en ce que** la structure de carrosserie (26) est un longeron de la carrosserie.
